# EUROPEAN PATENT APPLICATION

(11) **EP 4 645 235 A1**
(43) Date of publication of application: **05.11.2025**
(21) Application number: 24813865.3
(22) Date of filing: 28.03.2024
(51) Int. Cl.: G06T 15/04, G06T 15/00, G06T 3/00

(54) **CLOUD MAP PROCESSING METHOD AND APPARATUS, COMPUTER DEVICE, COMPUTER READABLE STORAGE MEDIUM, AND COMPUTER PROGRAM PRODUCT**

(30) Priority: 26.05.2023 CN 202310605898
(71) Applicant: Tencent Technology (Shenzhen) Company Limited, Shenzhen, Guangdong 518057 (CN)
(72) Inventor: ZHANG, Zhiyu, Shenzhen, Guangdong 518057 (CN)
(74) Representative: Gunzelmann, Rainer
(86) International application number: PCT/CN2024/084465
(87) International publication number: WO 2024/244659

(57) **Abstract**

Embodiments of the present application disclose a cloud map processing method and apparatus, a computer, and a readable storage medium. The method comprises: constructing a spatial coordinate system, and constructing basic cloud map data in the spatial coordinate system; by taking a first viewpoint position as the original point, constructing a local coordinate system corresponding to the first viewpoint position, acquiring sampling point position information of a first sampling point in the local coordinate system corresponding to the first viewpoint position, and performing position conversion on the sampling point position information to obtain cloud sampling position information, wherein local coordinate systems corresponding to different viewpoint positions are different; and on the basis of the cloud sampling position information, sampling the basic cloud map data to obtain sampled cloud information of the first sampling point.

## Description

### RELATED APPLICATION

Embodiments of this application claim priority to Chinese Patent Application No. 202310605898.4 filed on May 26, 2023, which is incorporated herein by reference in its entirety.

### FIELD OF THE TECHNOLOGY

This application relates to the field of computer technologies, and in particular, to a cloud map processing method and apparatus, a computer device, a computer-readable storage medium, and a computer program product.

### BACKGROUND OF THE DISCLOSURE

Currently, most cloud maps are mainly for a planar surface. Generally, a planar map is generated and the planar map is applied to a spherical surface to generate a spherical surface map. In this process, an infinite plane image is usually generated manually or by using a program. When a cloud map at a point on the surface of the earth needs to be sampled, longitude and latitude projections of the position change to plane coordinates corresponding to the plane image, and sampling is performed on an infinite plane cloud map by using the plane coordinates. In this manner, it is difficult to ensure uniform distribution of the plane coordinates, and distortion occurs in a region with a high latitude, causing relatively low accuracy of longitude and latitude projection results. Or, an entire spherical surface map is directly generated by using a modeling tool. In this manner, it is difficult to balance a conflict between precision and a data volume. Relatively large storage overheads and generation resources need to be consumed to generate a plane image with high precision, resulting in relatively low cloud map processing efficiency. A plane image with relatively low precision is generated, which leads to missing details from the plane image, and relatively low accuracy of cloud map processing.

### SUMMARY

Embodiments of this application provide a cloud map processing method and apparatus, a computer device, a computer-readable storage medium, and a computer program product, which can improve accuracy and efficiency of cloud map processing.

Embodiments of this application provide a cloud map processing method. The method includes:
obtaining a space coordinate system, and obtaining basic cloud map data in the space coordinate system;
obtaining a local coordinate system that uses a first viewpoint position as an origin, obtaining sampling point position information of a first sampling point in the local coordinate system corresponding to the first viewpoint position, and performing position transformation on the sampling point position information from the local coordinate system to the space coordinate system to obtain cloud sampling position information, where different local coordinate systems have different first viewport positions; and
sampling the basic cloud map data based on the cloud sampling position information to obtain sampled cloud information of the first sampling point.

Embodiments of this application provide a cloud map processing apparatus. The apparatus includes:
a cloud map obtaining module, configured to obtain a space coordinate system, and obtain basic cloud map data in the space coordinate system;
a local obtaining module, configured to obtain a local coordinate system that uses a first viewpoint position as an origin, where different local coordinate systems have different first viewpoint positions;
a position determining module, configured to obtain sampling point position information of a first sampling point in a local coordinate system corresponding to the first viewpoint position, and perform position transformation on the sampling point position information from the local coordinate system to the space coordinate system to obtain cloud sampling position information; and
a cloud sampling module, configured to sample the basic cloud map data based on the cloud sampling position information to obtain sampled cloud information of the first sampling point.

Embodiments of this application provide a computer device, including a processor, a memory, and an input/output interface,
the processor being separately connected to the memory and the input/output interface, the input/output interface being configured to receive data and output data, the memory being configured to store a computer program, and the processor being configured to invoke the computer program to enable the computer device including the processor to perform the cloud map processing method provided in the embodiments of this application.

Embodiments of this application provide a computer-readable storage medium. The computer-readable storage medium has a computer program stored therein. The computer program is applicable to be loaded and executed by a processor to enable the computer device including the processor to perform the cloud map processing method provided in the embodiments of this application.

Embodiments of this application provide a computer program product or a computer program. The computer program product or the computer program includes computer instructions. The computer instructions are stored in a computer-readable storage medium. A processor of a computer device reads the computer instructions from the computer-readable storage medium, and the processor executes the computer instructions to enable the computer device to perform the cloud map processing method provided in the embodiments of this application.

When the embodiments of this application are performed, the following beneficial effects are achieved:
in the embodiments of this application, a space coordinate system may be obtained, and basic cloud map data is obtained in the space coordinate system; a local coordinate system that uses a first viewpoint position as an origin is obtained, sampling point position information of a first sampling point in the local coordinate system corresponding to the first viewpoint position is obtained, and position transformation from the local coordinate system to the space coordinate system is performed on the sampling point position information to obtain cloud sampling position information, where different local coordinate systems have different first viewpoint positions; and the basic cloud map data is sampled based on the cloud sampling position information to obtain sampled cloud information of the first sampling point. By using the foregoing process, a piece of basic cloud map data can be obtained, and then during sampling, coordinates are determined based on a local coordinate system. That is, the problem of "generating a spherical map on a spherical surface" is converted into the problem of "rolling a sphere on a plane and generating a planar map near a tangent point (that is, sampling of the local coordinate system)", thereby simplifying a procedure and improving efficiency of producing cloud map data. In addition, based on local sampling, overheads, resources, and the like do not need to be consumed when the cloud map data with relatively high precision is generated, thereby saving resources and improving accuracy and efficiency of cloud map processing.

### BRIEF DESCRIPTION OF THE DRAWINGS

To describe technical solutions of embodiments of this application or a related art more clearly, the following briefly introduces accompanying drawings required for describing the embodiments or the related art. Apparently, the accompanying drawings in the following description show only some embodiments of this application, and a person of ordinary skill in the art may still derive other accompanying drawings from these accompanying drawings without creative efforts.
FIG. 1 is a diagram of a network interaction architecture for cloud map processing according to an embodiment of this application.
FIG. 2 is a diagram of a cloud map processing scenario according to an embodiment of this application.
FIG. 3 is a flowchart of a cloud map processing method according to an embodiment of this application.
FIG. 4a is a schematic diagram of a cloud map obtaining scenario according to an embodiment of this application.
FIG. 4b is a cloud map obtaining example according to an embodiment of this application.
FIG. 5 is another schematic diagram of a cloud map obtaining scenario according to an embodiment of this application.
FIG. 6 is a schematic diagram of a local coordinate system obtaining scenario according to an embodiment of this application.
FIG. 7 is a schematic diagram of a coordinate system transformation scenario according to an embodiment of this application.
FIG. 8 is a schematic diagram of a position determination scenario according to an embodiment of this application.
FIG. 9 is a schematic flowchart of cloud map data iterative processing according to an embodiment of this application.
FIG. 10 is a schematic flowchart of cloud sampling according to an embodiment of this application.
FIG. 11 is a schematic diagram of a cloud map processing apparatus according to an embodiment of this application.
FIG. 12 is a schematic structural diagram of a computer device according to an embodiment of this application.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

If data of an object (for example, a user) needs to be collected in this application, a prompt interface or a pop-up window is displayed before or during the collection. The prompt interface or the pop-up window is configured to prompt a user that XXXX data is currently being collected. Only after a confirm operation performed by the user on the prompt interface or the pop-up window is obtained, relevant operations of data obtaining start to be performed. Otherwise, the operation is ended. In addition, the obtained user data is used in a scenario, an objective, or the like that is proper and legal. In some scenarios in which user data needs to be used but is not authorized by a user, the user may be request to authorize, and the user data is used after being authorized. Use of the user data conforms to related regulations of laws and regulations.

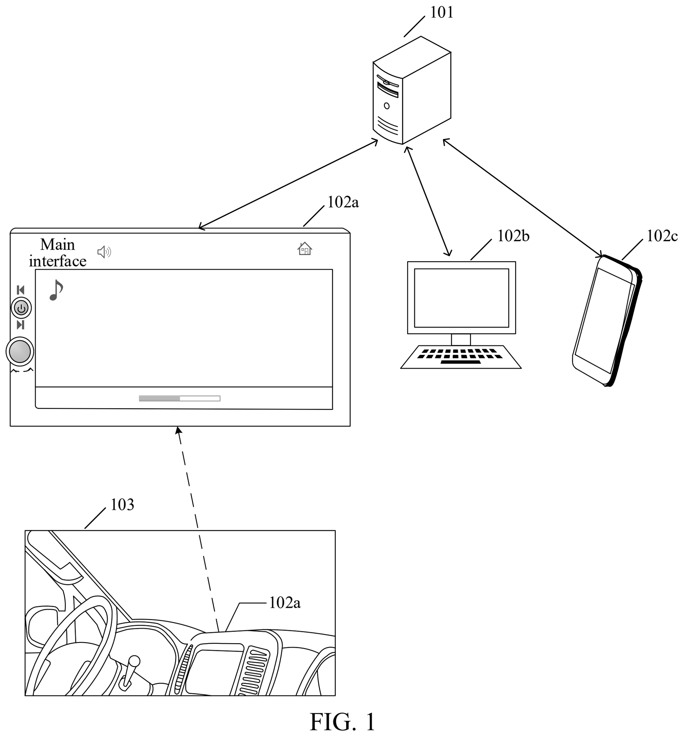

In this embodiment of this application, refer to FIG. 1, which is a diagram of a network interaction architecture for cloud map processing according to an embodiment of this application. As shown in FIG. 1, a computer device 101 may obtain a local coordinate system based on each viewpoint position located on a surface of an object model, and determine cloud information for each sampling point by using the local coordinate system to implement cloud map parsing of the object model. In some or all embodiments, the computer device 101 may receive a cloud map data rendering request of any one or more service devices, determine cloud information for each sampling point based on the cloud map data rendering request, and send the determined cloud information to a service device corresponding to the cloud map data rendering request. There may be one or more service devices, for example, a service device 102a, a service device 102b, and a service device 102c shown in FIG. 1. The object model is a model of a to-be-parsed object on which cloud parsing is performed. The to-be-parsed object is an object on which cloud parsing is performed, and may be a physical object, or may be a virtual object in an application program. The physical object may be, but is not limited to, the earth or another object having a relatively large surface. The virtual object may be, but is not limited to, an object on which cloud map processing needs to be performed in an application, for example, a virtual planet in a game application. By using the foregoing process, cloud parsing can be performed on each sampling point based on the local coordinate system, so that a problem of "generating a spherical map on a spherical surface" is simplified to a problem of "a local map", thereby simplifying a cloud map processing procedure, and improving accuracy and efficiency of the cloud map processing.

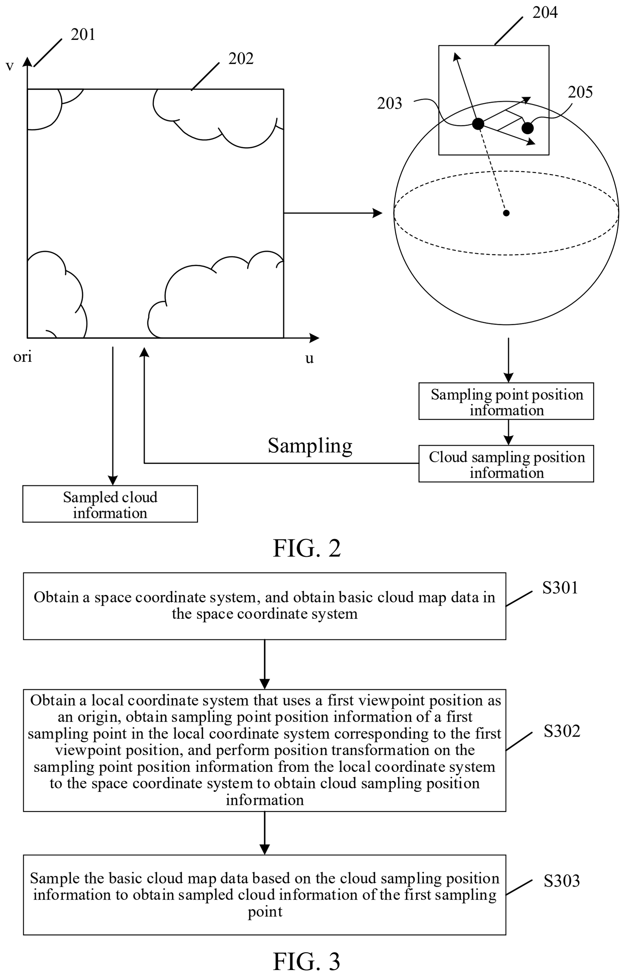

Specifically, refer to FIG. 2, which is a schematic diagram of a cloud map processing scenario according to an embodiment of this application. As shown in FIG. 2, the computer device may obtain a space coordinate system 201. The space coordinate system 201 includes a horizontal coordinate axis (a u axis), a longitudinal coordinate axis (a v axis), and a coordinate system origin (an ori point). The space coordinate system 201 may be considered as a plane coordinate system. For example, a horizontal coordinate axis and a longitudinal coordinate axis may be constructed by using two cloud distribution ranges (such as 0 to 1), and the space coordinate system 201 is obtained based on the horizontal coordinate axis and the longitudinal coordinate axis. Further, basic cloud map data 202 may be obtained in the space coordinate system 201. Cloud map data (Cloud-map/Weather-map/Weather-texture) in this embodiment of this application is configured for representing information such as distribution and form of a volume cloud under a bird's eye view, that is, a cloud map. Further, a local coordinate system 204 may be obtained by using the first viewpoint position 203 as an origin. The local coordinate system 204 may be considered to be generated based on a tangent plane of the object model at the first viewpoint position 203. Sampling point position information of the first sampling point 205 in the local coordinate system 204 corresponding to the first viewpoint position 203 may be obtained, and position transformation from the local coordinate system to the space coordinate system is performed on the sampling point position information to obtain cloud sampling position information. The cloud sampling position information is configured for representing a position of the first sampling point 205 in the basic cloud map data 202. Different local coordinate systems have different first viewpoint positions. The basic cloud map data 202 may be sampled based on the cloud sampling position information to obtain sampled cloud information of the first sampling point 205. The local coordinate system is obtained, so that cloud sampling position information is determined for each sampling point in a local coordinate system corresponding to an adjacent viewpoint position. The local coordinate system is obtained, so that a region range corresponding to each local coordinate system is relatively small, and plane coordinate distribution in each local coordinate system is relatively uniform. Therefore, each sampling point can be better and more accurately mapped to the basic cloud map data for sampling, thereby improving accuracy and efficiency of cloud map processing.

The computer device described in this embodiment of this application includes, but is not limited to, a terminal device or a server. In other words, the computer device may be a server or a terminal device, or may be a system including a server and a terminal device. The terminal device mentioned above may be an electronic device, which includes, but is not limited to, a mobile phone, a tablet computer, a desktop computer, a notebook computer, a palmtop computer, an in-vehicle device, an augmented reality/virtual reality (AR/VR) device, a helmet display, a smart television, a wearable device, a smart speaker, a digital camera, a camera, and another mobile internet device (MID) having a network access capability, or a terminal device in scenarios such as a train, a ship, and flight. As shown in FIG. 1, the terminal device may be a notebook computer (as shown by the computer device 102b), a mobile phone (as shown by the computer device 102c), an in-vehicle device (as shown by the computer device 102a), or the like. FIG. 1 merely shows some devices. In some or all embodiments, the computer device 102a is a device located in a vehicle 103. The computer device 102a may be configured to display cloud map data and the like. The foregoing described server may be an independent physical server, a server cluster or distributed system including a plurality of physical servers, or a cloud server that provides a basic cloud computing service such as a cloud service, a cloud database, cloud computing, a cloud function, cloud storage, a network service, cloud communication, a middleware service, a domain name service, a security service, vehicle infrastructure cooperation, a content delivery network (CDN), big data, and an artificial intelligence platform.

The data involved in this embodiment of this application may be stored in a computer device, or may be stored by using a cloud storage technology or a blockchain network. This is not limited herein.

Refer to FIG. 3, which is a flowchart of a cloud map processing method according to an embodiment of this application. As shown in FIG. 3, a cloud map processing process includes the following operations.

Operation S301: Obtain a space coordinate system, and obtain basic cloud map data in the space coordinate system.

In some or all embodiments, the computer device may implement the operation S301 of obtaining the basic cloud map data in the space coordinate system the following manner: obtaining candidate cloud map data, and associating the candidate cloud map data with the space coordinate system to generate initial unit cloud map data; and determining the initial unit cloud map data as the basic cloud map data, or, performing seamless continuation on the initial unit cloud map data to generate the basic cloud map data.

In an actual application, the computer device may first obtain a space coordinate system, obtain initial unit cloud map data in the space coordinate system, and determine the initial unit cloud map data as the basic cloud map data, or perform seamless continuation on the initial unit cloud map data based on the initial unit cloud map data, including up-down seamless self-connection, left-right seamless self-connection, and the like, to generate the basic cloud map data. For example, a space coordinate system may be obtained. According to the space coordinate system, a horizontal coordinate is obtained by using a first value range, a vertical coordinate is obtained by using a second value range, and the horizontal coordinate and the vertical coordinate form the space coordinate system. Candidate cloud map data is obtained, and the candidate cloud map data is associated with the space coordinate system to generate initial unit cloud map data. That the candidate cloud map data is associated with the space coordinate system refers to that a position of each pixel in the candidate cloud map data in the space coordinate system. The candidate cloud map data refers to refined cloud map data manually drawn, refined cloud map data generated by using a model and manually optimized, or the like. The candidate cloud map data has a relatively small size. For example, the candidate cloud map data has a size less than or equal to a unit size threshold such as 50 meters × 50 meters. Specifically, the candidate cloud map data may be determined according to drawing costs of the cloud map data. For example, when producing costs of the cloud map data are reduced, the unit size threshold or the like may be increased, so that required cloud map data may be obtained by only consuming relatively few labor costs and resources when the candidate cloud map data is generated, thereby reducing costs for generating the cloud map data.

In some or all embodiments, the computer device may implement operation S301 in the following manner: obtaining a to-be-parsed image, and performing coordinate transformation on an image size of the to-be-parsed image to obtain a space coordinate system; performing image parsing on the to-be-parsed image, and mapping a parsing result to the space coordinate system to obtain initial unit cloud map data; and performing seamless continuation on the initial unit cloud map data based on the initial unit cloud map data to generate the basic cloud map data.

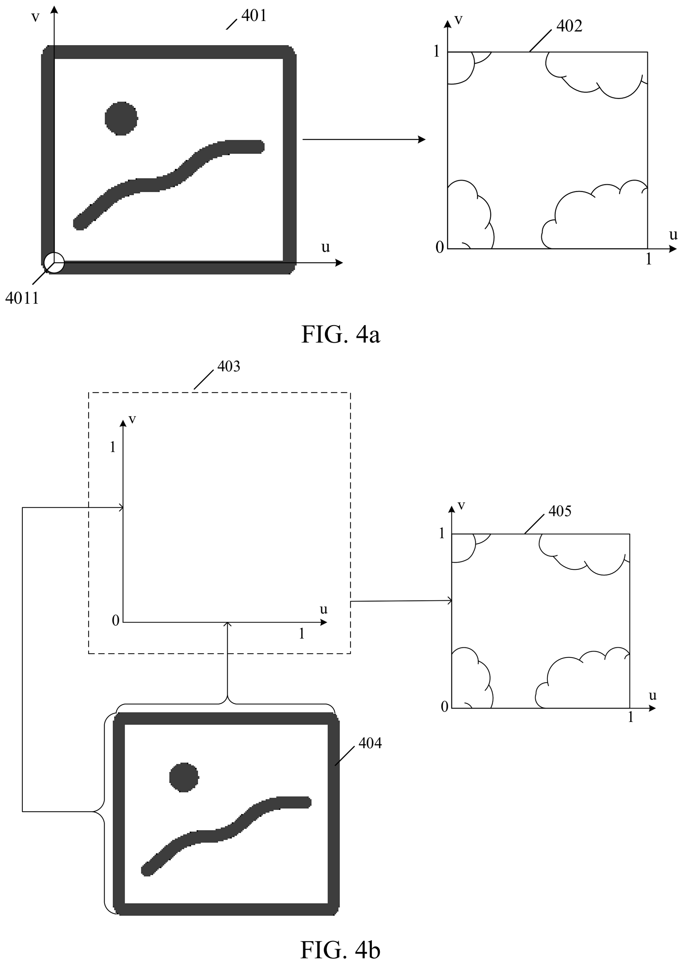

In an actual application, the computer device may obtain a to-be-parsed image, and perform coordinate transformation on an image size of the to-be-parsed image to obtain a space coordinate system. For example, refer to FIG. 4a, which is a schematic diagram of a cloud map obtaining scenario according to an embodiment of this application. As shown in FIG. 4a, the computer device may use a lower left corner 4011 of the to-be-parsed image 401 as an origin of a coordinate system, construct a horizontal coordinate axis (a u axis) based on a width of the to-be-parsed image 401, construct a longitudinal coordinate axis (a v axis) based on a height of the to-be-parsed image 401, and obtain an initial coordinate system by using the origin of the coordinate system, the horizontal coordinate axis, and the longitudinal coordinate axis. The initial coordinate system may be considered as a two-dimensional coordinate system. A value of a horizontal coordinate in the two-dimensional coordinate system falls within a first value range, a value of a vertical coordinate falls within a second value range, and the first value range and the second value range may be considered as default texture coordinate ranges, that is, UV coordinate ranges "0 to 1". Scale variation is performed on a size of the to-be-parsed image 401, a coordinate scale corresponding to the initial coordinate system is determined, and the coordinate scale is associated with the initial coordinate system to generate a space coordinate system 402. The scale variation manner includes, but is not limited to, normalization processing, coordinate transformation processing (that is, performing scale variation on the size of the to-be-parsed image 401 by using a coordinate transformation function), and the like. For example, the to-be-parsed image 401 is a 100×50 image, and the space coordinate system 402 is generated based on the size of the to-be-parsed image 401. In this case, the space coordinate system may be configured to represent a position of any point in the space coordinate system in the to-be-parsed image 401. For example, (0.1, 0.2) in the space coordinate system represents a pixel (10, 10) in the to-be-parsed image 401. The coordinate scale is configured to represent a coordinate association relationship between the initial coordinate system and the to-be-parsed image, that is, may represent a position of any point in the initial coordinate system in the to-be-parsed image, or a position of any point in the to-be-parsed image in the initial coordinate system. By associating the coordinate scale in the initial coordinate system, a corresponding pixel in the to-be-parsed image may be found for any point in the basic cloud map data obtained by using the space coordinate system. That is, it may be considered that the initial coordinate system is the same when the to-be-parsed image is different. The space coordinate system is mainly configured to map the to-be-parsed image to the initial coordinate system, that is, carry the coordinate scale. If the initial coordinate system is formed by a horizontal coordinate axis "0 to 1" and a vertical coordinate axis "0 to 1", and the to-be-parsed image 401 is a 100×50 image, the coordinate scale includes "a width: 0.01, a height: 0.02", that is, a point at a position (x₁, y₁) in the to-be-parsed image 401 is at a position (x₁×0.01, y₁×0.02) in the initial coordinate system, and a point at a position (x₂, y₂) in the initial coordinate system is at the position (x₂/0.01, y₂/0.02) in the to-be-parsed image.

For example, refer to FIG. 4b, which is a cloud map obtaining example according to an embodiment of this application. As shown in FIG. 4b, an initial coordinate system 403 may be obtained, a to-be-parsed image 404 is obtained, a coordinate scale between the initial coordinate system 403 and the to-be-parsed image 404 is determined based on the initial coordinate system 403 and the to-be-parsed image 404, and the coordinate scale is associated with the initial coordinate system 403 to obtain a space coordinate system.

After the space coordinate system is obtained, image parsing is performed on the to-be-parsed image, and a parsing result is mapped to the space coordinate system to obtain initial unit cloud map data. The to-be-parsed image is an image carrying cloud information. The computer device may extract the cloud information from the to-be-parsed image to obtain image cloud information, and map the image cloud information to the space coordinate system based on distribution of the image cloud information in the to-be-parsed image to obtain the initial unit cloud map data. For example, the distribution of the image cloud information in the space coordinate system may be determined based on the distribution of the image cloud information in the to-be-parsed image and the coordinate scale. The image cloud information is mapped to the space coordinate system based on the distribution of the image cloud information in the space coordinate system to obtain the initial unit cloud map data. As shown in FIG. 4b, the image cloud information may be mapped to the space coordinate system 403 based on the distribution of the image cloud information in the space coordinate system 403 to obtain initial unit cloud map data 405. The cloud map data is configured to represent information such as distribution and form of a volume cloud under a bird's eye view.

In some or all embodiments, after the initial unit cloud map data is obtained, the initial unit cloud map data may be determined as the basic cloud map data. When the cloud map data is subsequently sampled, cloud sampling position information of a sampling point may be mapped to the initial unit cloud map data, so that the initial unit cloud map data may be directly used as the basic cloud map data as the cloud map data to be subsequently sampled. In this way, a data volume of the cloud map data that needs to be maintained can be reduced, and a large amount of space for finely storing the cloud map data can be saved, thereby improving efficiency of cloud map processing.

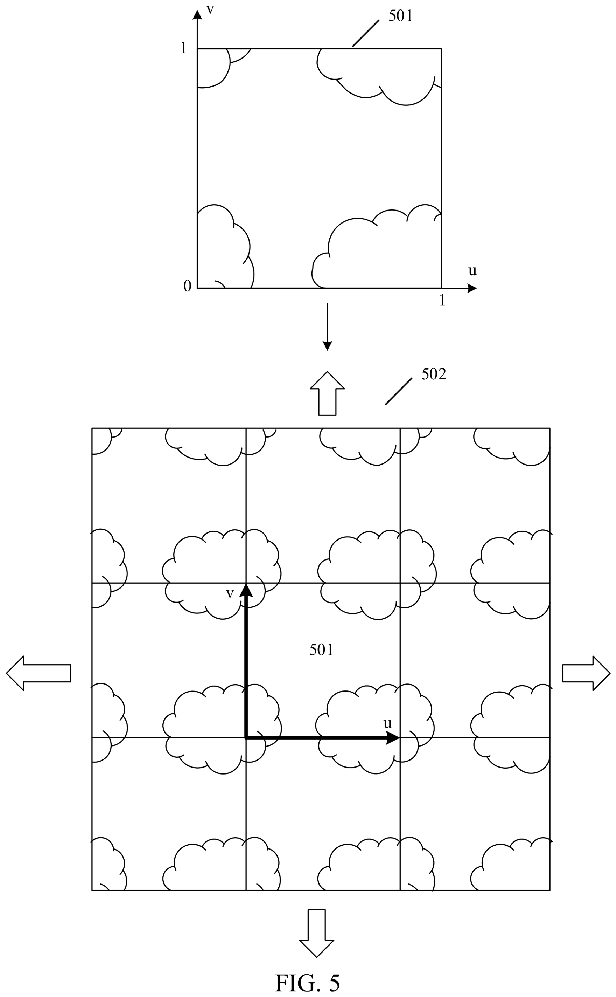

In some or all embodiments, seamless continuation may be further performed on the initial unit cloud map data based on the initial unit cloud map data to generate the basic cloud map data in the following manner: performing seamless continuation on the initial unit cloud map data based on the initial unit cloud map data, including up-down seamless self-connection, left-right seamless self-connection, and the like, to generate the basic cloud map data. In this case, the basic cloud map data refers to infinite cloud map data. For example, refer to FIG. 5, which is another schematic diagram of a cloud map obtaining scenario according to an embodiment of this application. As shown in FIG. 5, the computer device may perform seamless continuation on initial unit cloud map data 501 based on the initial unit cloud map data 501, that is, continuously copy the initial unit cloud map data 501, and perform seamless connection on the copied initial unit cloud map data and initial unit cloud map data 501 at the beginning (before copying). For example, in directions shown by various hollow arrows shown in FIG. 5, seamless connection is continuously performed on the existing initial unit cloud map data, so as to obtain infinite basic cloud map data 502.

In some or all embodiments, a quantity of to-be-parsed images is N, and N is a positive integer. In this case, seamless continuation may be performed on the initial unit cloud map data based on the initial unit cloud map data to generate the basic cloud map data in the following manner: determining, according to the initial unit cloud map data respectively corresponding to the N to-be-parsed images, as hierarchical cloud map data respectively corresponding to the N to-be-parsed images; determining, based on height ranges respectively corresponding to the N to-be-parsed images, cloud map height ranges respectively corresponding to the N pieces of hierarchical cloud map data; and combining the N pieces of hierarchical cloud map data based on the cloud map height ranges respectively corresponding to the N pieces of hierarchical cloud map data to obtain the basic cloud map data.

In an actual application, assuming that a quantity of to-be-parsed images is N, and N is a positive integer. In this case, based on the initial unit cloud map data, when seamless continuation is performed on the initial unit cloud map data to generate the basic cloud map data, seamless continuation may be performed on each of the N pieces of initial unit cloud map data based on the initial unit cloud map data respectively corresponding to the N to-be-parsed images to generate the N pieces of hierarchical cloud map data. For a generation manner of each piece of hierarchical cloud map data, refer to the foregoing generation manner of the basic cloud map data 502. Using generating first hierarchical cloud map data as an example, based on the initial unit cloud map data corresponding to the first to-be-parsed image (that is, first initial unit cloud map data), seamless continuation is performed on the first initial unit cloud map data, that is, the first initial unit cloud map data is continuously copied, seamless connection is performed on the copied initial unit cloud map data and the first initial unit cloud map data at the beginning (before copying), and seamless connection is continuously performed on the existing first initial unit cloud map data, so as to obtain infinite basic cloud map data, that is, the first hierarchical cloud map data. In the foregoing manner, a second piece, a third piece, ..., and an N^{th} piece of hierarchical cloud map data may be obtained, that is, N pieces of hierarchical cloud map data need to be determined.

After the N pieces of hierarchical cloud map data are determined, cloud map height ranges respectively corresponding to the N pieces of hierarchical cloud map data are determined based on height ranges respectively corresponding to the N to-be-parsed images. The height range corresponding to each to-be-parsed image may be provided by a user providing the to-be-parsed image, or may be directly manually set. Or, the N to-be-parsed images may be respectively input into a height parsing model. In the height parsing model, cloud information features respectively corresponding to the N to-be-parsed images are parsed, height matching is performed on the cloud information features, and height ranges respectively corresponding to the N to-be-parsed images and the like are determined. The N pieces of hierarchical cloud map data are combined based on the cloud map height ranges respectively corresponding to the N pieces of hierarchical cloud map data to obtain the basic cloud map data. For example, assuming that N is 3, and the cloud map height ranges respectively corresponding to the N pieces of hierarchical cloud map data are "0 to 500 meters", "500 meters to 1500 meters", and "over 1500 meters", it indicates that the cloud map height ranges respectively corresponding to the N pieces of hierarchical cloud map data are "0 to 500 meters", "500 meters to 1500 meters", "over 1500 meters", and the like.

That is, the basic cloud map data may be two-dimensional cloud map data, or may include N pieces of hierarchical cloud map data carrying height information, and the like.

Operation S302: Obtain a local coordinate system that uses a first viewpoint position as an origin, obtain sampling point position information of a first sampling point in the local coordinate system corresponding to the first viewpoint position, and perform position transformation on the sampling point position information from the local coordinate system to the space coordinate system to obtain cloud sampling position information.

Different local coordinate systems have different first viewpoint positions. The local coordinate system that uses a first viewpoint position as an origin (or the local coordinate system corresponding to the first viewpoint position) refers to a coordinate system formed by three coordinate axes constructed by the first viewpoint position by using the first viewpoint position as an origin.

In some or all embodiments, operation S302 of obtaining a local coordinate system that uses a first viewpoint position as an origin may be implemented in the following manner: in an i^{th} viewpoint movement frame (or in in obtaining an i^{th} local coordinate system), when i is an initial value, a first viewpoint position i is determined based on a first geographic coordinate point, a first coordinate axis i is determined based on a second geographic coordinate point and the first geographic coordinate point, a second coordinate axis i is constructed in a direction from an object model center point to the first viewpoint position i, a third coordinate axis i is determined based on the first coordinate axis i and the second coordinate axis i, and the i^{th} local coordinate system corresponding to the first viewpoint position i is formed by the first coordinate axis i, the second coordinate axis i, and the third coordinate axis i.

The first geographic coordinate point may be coordinates randomly obtained from a surface of the object model of a to-be-parsed object, or may be coordinates of an initial point of the surface of the object model. If the object model is the earth, the first geographic coordinate point may be a point of world coordinates (0, 0, 0). If the object model is a model of a virtual object in an application, the first geographic coordinate point may be coordinates of an initial point of the application and the like.

Further, the first viewpoint position i may be determined as an origin, and the first coordinate axis i is determined based on the second geographic coordinate point and the first geographic coordinate point i. In some or all embodiments, the first coordinate axis i may be determined based on the second geographic coordinate point and the first geographic coordinate point in the following manner: obtaining a tangent plane of the object model at the first geographic coordinate point, obtaining a projection length of the second geographic coordinate point on the tangent plane, and determining a direction from the first geographic coordinate point to the second geographic coordinate point as the first coordinate axis i when the projection length of the second geographic coordinate point on the tangent plane is not 0; and moving the second geographic coordinate point along the tangent plane to obtain third geographic coordinates when the projection length of the second geographic coordinate point on the tangent plane is 0, and determining a direction from the first geographic coordinate point to the third geographic coordinates as the first coordinate axis i when a projection length of the third geographic coordinates on the tangent plane is not 0.

The projection length is configured to represent a distance between a projection point of the second geographic coordinate point on the tangent plane and the first geographic coordinate point. The tangent plane is a plane that is tangent to the surface of the object model, and uses the first geographic coordinate point as a tangent point. If the projection length is not 0, the direction from the first geographic coordinate point to the second geographic coordinate point is determined as the first coordinate axis i. If the projection length is 0, it indicates that the second geographic coordinate point is located on a vertical line of the tangent plane and cannot be used as the first coordinate axis i, and the third geographic coordinates are obtained. When the projection length of the third geographic coordinates on the tangent plane is not 0, a direction from the first geographic coordinate point to the third geographic coordinates is determined as the first coordinate axis i.

For example, the second geographic coordinate point is (1, 0, 0). If the projection length of the second geographic coordinate point on the tangent plane is 0, third geographic coordinates (0, 1, 0) are selected, and a direction from the first geographic coordinate point to the third geographic coordinates is determined as the first coordinate axis i. Because the second geographic coordinate point is located on a vertical line of the tangent plane, and specifically, is located on a coordinate axis perpendicular to the tangent plane, the third geographic coordinates obtained after the second geographic coordinate point is moved along the tangent plane cannot be located on the coordinate axis perpendicular to the tangent plane, and the first coordinate axis i can be determined based on this. The viewpoint movement frame is configured to indicate that when the local coordinate system is obtained for the surface of the object model of the to-be-parsed object, a stage at which the local coordinate system is obtained may be considered as a viewpoint movement frame, and first viewpoint positions corresponding to different viewpoint movement frames are different. That is, cloud parsing of the to-be-parsed object may be approximated as parsing a process in which the surface of the object model of the to-be-parsed object is rolled on a plane. In this case, it may be considered that a first viewpoint position is used as an initial point to construct the local coordinate system, and then the surface of the object model of the to-be-parsed object is continuously offset based on the initial point to obtain a next first viewpoint position to determine the local coordinate system until the surface of the object model of the to-be-parsed object is traversed completely. A process of obtaining each local coordinate system may be considered as a viewpoint movement frame.

A second coordinate axis i is constructed by using a direction from the object model center point to the first viewpoint position i, that is, a vector o from the object model center point to the first viewpoint position i is determined as the second coordinate axis i. That the third coordinate axis i is determined based on the first coordinate axis i and the second coordinate axis i may be specifically that a cross product of vectors respectively corresponding to the first coordinate axis i and the second coordinate axis i may be determined as the third coordinate axis i. The local coordinate system i corresponding to the first viewpoint position i is formed by using the first coordinate axis i, the second coordinate axis i, and the third coordinate axis i. The object model center point refers to a center point of an object model on which cloud parsing is performed. That is, any surface position of the object model is used as a starting point, and a plane is tangent to the object model at the point, so that the local coordinate system i corresponding to the first viewpoint position i may be determined by using the first viewpoint position i and the tangent plane of the first viewpoint position i. The first coordinate axis i and the third coordinate axis i are located on the tangent plane corresponding to the first viewpoint position i. Cloud map coordinates of the first viewpoint position i may be determined as coordinates of an origin in the local coordinate system i corresponding to the first viewpoint position i. The cloud map coordinates are configured for representing coordinates of a corresponding point (for example, a viewpoint position or a collection point) in the local coordinate system. For example, the cloud map coordinates of the first viewpoint position i are coordinates of the first viewpoint position i in the local coordinate system i. In an actual application, default origin coordinates, for example, (0, 0), may be determined as the cloud map coordinates of the first viewpoint position i. Or, a coordinate mapping method may be used to transform the geographical coordinates of the first viewpoint position i into the cloud map coordinates. The coordinate mapping method is a method of mapping the geographical coordinates to the local coordinate system, or may be manually determined, or may be another method of transforming three-dimensional coordinates into two-dimensional coordinates. This is not limited herein. The geographical coordinates are coordinates in a global coordinate system. For example, when the to-be-parsed object is the earth, the global coordinate system may be world coordinates on the earth. For example, when the to-be-parsed object is an object in a game application, the global coordinate system may be a coordinate system of a game map in the game application.

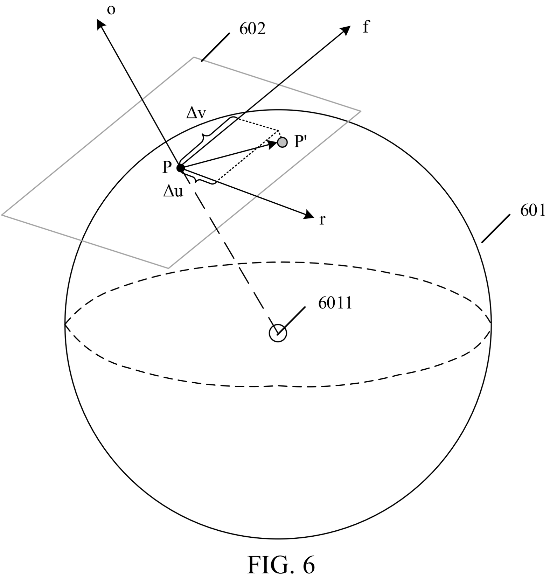

For example, refer to FIG. 6, which is a schematic diagram of a local coordinate system obtaining scenario according to an embodiment of this application. As shown in FIG. 6, assuming that a first viewpoint position i in an object model 601 is a point P, the first viewpoint position i is used as an origin, and a second coordinate axis i, that is, a direction of a vector o, is constructed in a direction from an object model center 6011 to the first viewpoint position i. The first coordinate axis i, that is, a direction of a vector r, is determined based on the second geographic coordinate point and the first geographic coordinate point. Further, a third coordinate axis i, that is, a direction of a vector f, is determined based on a cross product of the first coordinate axis i and the second coordinate axis i. Further, coordinate scales may be respectively associated for the first coordinate axis i, the second coordinate axis i, and the third coordinate axis i to obtain a local coordinate system i corresponding to the first viewpoint position i. Coordinates of the origin i of the local coordinate system i may be recorded as (0, 0). The first coordinate axis i and the third coordinate axis i are located on a tangent plane 602 corresponding to the first viewpoint position i.

In some or all embodiments, operation S302 of obtaining a local coordinate system that uses a first viewpoint position as an origin may be implemented in the following manner: in an i^{th} viewpoint movement frame, when i is not an initial value, determining a viewing prospective collection point where the i^{th} viewpoint movement frame is located (a viewing prospective collection point of the i^{th} local coordinate system) as the first viewpoint position i, constructing a second coordinate axis i in a direction from an object model center point to the first viewpoint position i by using the first viewpoint position i as an origin, constructing a first coordinate axis i based on a third coordinate axis (i-1) corresponding to an (i-1)^{th} viewpoint movement frame (or, a third coordinate axis in an (i-1)^{th} local coordinate system) and the second coordinate axis i, constructing a third coordinate axis i of the i^{th} local coordinate system based on the first coordinate axis i and the second coordinate axis i, and forming a local coordinate system i corresponding to the first viewpoint position i by using the first coordinate axis i, the second coordinate axis i, and the third coordinate axis i.

When the first coordinate axis i is constructed, the third coordinate axis (i-1) may be translated to the first viewpoint position i to obtain a reference third coordinate axis. The first coordinate axis i is constructed based on the reference third coordinate axis and the second coordinate axis i. For example, a cross product of a direction vector corresponding to the reference third coordinate axis and a direction vector corresponding to the second coordinate axis i may be determined as a direction vector of the first coordinate axis i. The first coordinate axis i may be obtained based on the direction vector of the first coordinate axis i. Certainly, the first coordinate axis i may alternatively be determined in another manner, that is, a manner of constructing the third coordinate axis with two known coordinate axes.

When the third coordinate axis i is constructed based on the first coordinate axis i and the second coordinate axis i, and the first coordinate axis i, the second coordinate axis i, and the third coordinate axis i form the local coordinate system i corresponding to the first viewpoint position i, when a viewpoint moves at a near-ground position, it may be considered that the object model rolls on an infinite plane, cloud map data in a visible range continuously changes, and a change trend is the same as a rolling process. During rendering, generally, only a cloud in a range centered on the viewpoint needs to be rendered, and long-distance observation does not need to be performed in outer space. Therefore, a cloud distribution image covering an entire surface of the object model does not need to be directly generated. Therefore, the local coordinate system may be dynamically generated based on viewpoint movement, and whether the cloud in the viewpoint range correctly displaces relative to a camera is only concerned in a viewpoint movement process, which is not sensitive to a direction, a form, and the like of cloud distribution at a same position before a period of time. Therefore, a problem that a spherical map is generated on a spherical surface may be converted into a problem that a spherical map rolls on an infinite plane, and a planar map near a tangent point (that is, a viewpoint position) is dynamically generated. That is, a local coordinate system of a current viewpoint movement frame may be obtained based on a previous viewpoint movement frame. The foregoing label (i-1) is configured to indicate that corresponding data is data generated in an (i-1)^{th} viewpoint movement frame. For example, the third coordinate axis (i-1) is configured to indicate a third coordinate axis in the local coordinate system corresponding to the (i-1)^{th} viewpoint movement frame, the first viewpoint position (i-1) is configured to indicate a first viewpoint position corresponding to the (i-1)^{th} viewpoint movement frame, and the like.

In an actual application, if i is not an initial value, a viewing prospective collection point (that is, a viewpoint) of the i^{th} viewpoint movement frame may be determined as the first viewpoint position i. As shown in FIG. 6, the first viewpoint position i is a point P '. The first viewpoint position i may be considered to be obtained by moving the first viewpoint position (i-1). Assuming that the first viewpoint position (i-1) is a point P, a movement vector may be recorded as m, that is, m = PP'. Assuming that cloud map coordinates of the point P may be recorded as P (U, V), cloud map coordinates of the point P' may be recorded as P' (U ', V'), and may be recorded as U'= U+Δu, and V'=V+Δv, coordinates (Δu, Δv) of the first viewpoint position i in the local coordinate system (i-1) may be determined as a position offset of the first viewpoint position i relative to the first viewpoint position (i-1). The position offset of the first viewpoint position i relative to the first viewpoint position (i-1) is added to the cloud map coordinates of the first viewpoint position (i-1) to obtain the cloud map coordinates of the first viewpoint position i, which are recorded as P'(U', V ')=P'(U+Δu, V'=V+Δv). Similarly, cloud map coordinates of the first viewpoint position configured to construct the local coordinate system may be obtained. The cloud map coordinates of any point (for example, the first viewpoint position or a first sampling point) are coordinates of the point in a corresponding local coordinate system. A length of m is less than or equal to an adjacent frame movement threshold, that is, a length of PP' is less than or equal to the adjacent frame movement threshold. A viewpoint movement distance between two adjacent viewpoint movement frames, that is, a change distance of the first viewpoint position, is limited by using the adjacent frame movement threshold, so that two adjacent local coordinate systems do not suddenly change, thereby improving fault tolerance of the local coordinate system in cloud map processing, and improving accuracy and efficiency of the cloud map processing.

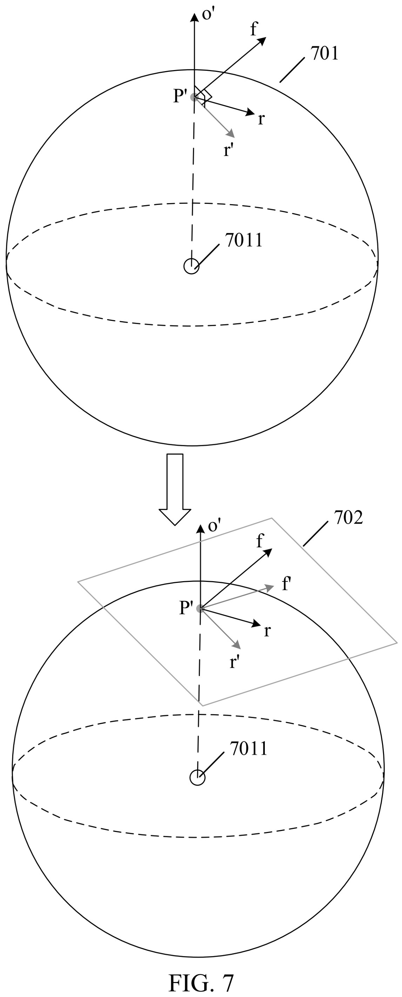

In the i^{th} viewpoint movement frame, a direction of a vector f corresponding to the point P and a direction of a vector r pass through a plane passing through the point P, and are no longer tangent to the surface of the object model. To enable that a plane that is formed by two coordinate axes and passes through the viewpoint position in the local coordinate system always keeps a tangent relationship with the surface of the object model, the local coordinate system may be updated. Specifically, refer to FIG. 7, which is a schematic diagram of a coordinate system transformation scenario according to an embodiment of this application. As shown in FIG. 7, a second coordinate axis i, that is, a direction of a vector o', may be constructed in a direction from an object model center point 7011 of an object model 701 to a first viewpoint position i. First assuming that a third coordinate axis (i-1) is unchanged, that is, a direction of a vector f is unchanged, a first coordinate axis i, that is, a direction of a vector r', is constructed based on a third coordinate axis (i-1) and the second coordinate axis i. Based on the first coordinate axis i and a third coordinate axis i, the third coordinate axis i, that is, a direction of a vector f, is constructed. A local coordinate system i corresponding to the first viewpoint position i is formed by using the first coordinate axis i, the second coordinate axis i, and the third coordinate axis i. In this case, it may be considered that the first coordinate axis i and the third coordinate axis i are located on a tangent plane 702 corresponding to the first viewpoint position i (that is, a point P'). Specifically, a foregoing coordinate scale may be associated for each of the first coordinate axis i, the second coordinate axis i, and the third coordinate axis i by using the first viewpoint position i as an origin i to obtain the local coordinate system i corresponding to the first viewpoint position i. The coordinate scale is configured to represent a scale change manner of transforming coordinates on the object model into the local coordinate system. In some or all embodiments, coordinates of the origin i may be recorded as (0, 0). In this case, it may be considered that coordinate values of local coordinate systems corresponding to different viewpoint positions are the same. Or, object coordinates of the first viewpoint position i may be transformed into cloud map coordinates, the cloud map coordinates corresponding to the first viewpoint position i are determined as coordinates of the origin i, and coordinate values of the local coordinate system i on the first coordinate axis i and the third coordinate axis i are determined based on the coordinate scale. In any two adjacent viewpoint movement frames, when a moving distance is very small relative to the object model, and fine steering generated each time cannot be perceived by human eyes. Therefore, at a viewpoint position near a viewpoint collection device (for example, a camera in a game application), a subjective feeling of human is that the local coordinate system of the viewpoint position correspondingly continuously changes according to a direction of the viewpoint collection device, so that accuracy of cloud map processing can be improved when the local coordinate system is obtained based on adjacent viewpoint movement frames.

In some or all embodiments, operation S302 of obtaining sampling point position information of a first sampling point in the local coordinate system corresponding to the first viewpoint position may be implemented in the following manner: obtaining position information of the first viewpoint position, and obtaining a coordinate offset of the first sampling point in the local coordinate system corresponding to the first viewpoint position; and adding the coordinate offset to the position information of the first viewpoint position to determine the sampling point position information of the first sampling point.

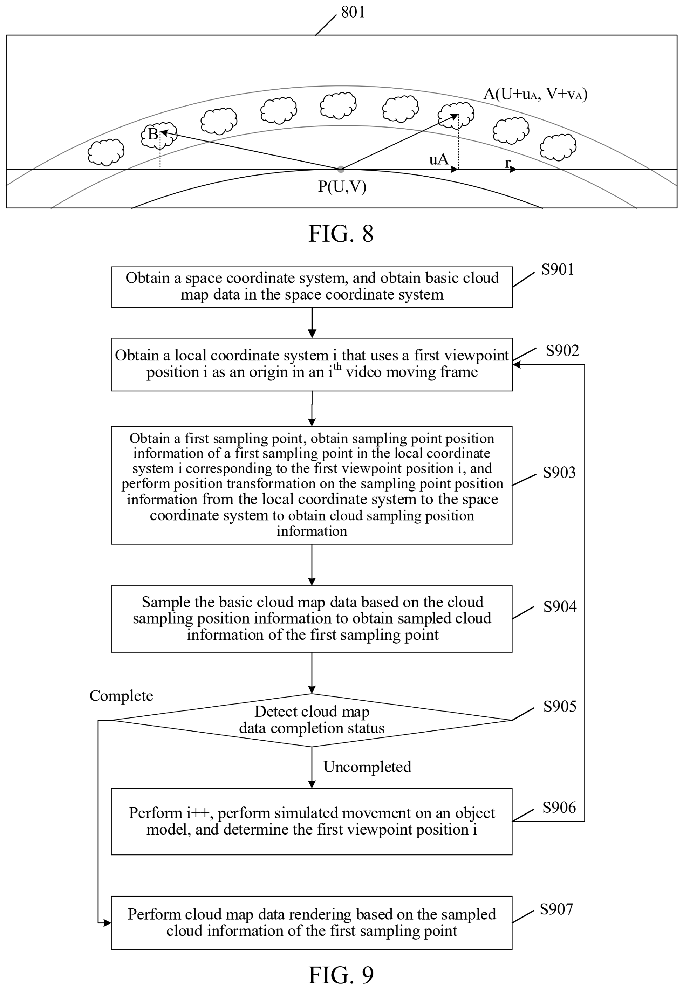

In an actual application, when the sampling point position information of the first sampling point in the local coordinate system corresponding to the first viewpoint position is obtained, and position transformation from the local coordinate system to the space coordinate system is performed on the sampling point position information to obtain cloud sampling position information, the first sampling point in the local coordinate system i may be obtained, sampling coordinates of the first sampling point in the local coordinate system i are obtained, and the sampling coordinates of the first sampling point in the local coordinate system i are used as the sampling point position information of the first sampling point. When the position information of the first viewpoint position is obtained, and the coordinate offset of the first sampling point in the local coordinate system corresponding to the first viewpoint position is obtained, for example, refer to FIG. 8, which is a schematic diagram of a position determination scenario according to an embodiment of this application. As shown in FIG. 8, a region 801 is configured to represent a cross-sectional view of a first viewpoint position P. Assuming that the first sampling point is a point A, position information of the first viewpoint position P, that is, cloud map coordinates of the first viewpoint position P, is obtained, and a coordinate offset, that is, (u_{A}, v_{A}), of the first sampling point A in the local coordinate system corresponding to the first viewpoint position P is obtained. The coordinate offset is added to the position information of the first viewpoint position to determine sampling point position information of the first sampling point, which is recorded as A (U+u_{A}, V+v_{A}). Actual shape distortion of a sampling point closer to the surface of the object model is larger. As shown in FIG. 8, shape distortion of a point B is greater than shape distortion of a point A. However, in an actual scenario, a position closer to the surface of the object model actually occupies a smaller image proportion in the cloud map data, and the cloud map data is more easily blocked by more foreground objects. Therefore, a sense of reality of an image result cannot be affected, thereby ensuring accuracy of cloud map processing.

In some or all embodiments, coordinates of origins of different local coordinate systems are all (0, 0), and the sampling coordinates of the first sampling point in the corresponding local coordinate system may be determined as the sampling point position information of the first sampling point. Or, the cloud map coordinates of the first viewpoint position may be determined as the position information of the first viewpoint position, the sampling coordinates of the first sampling point in the corresponding local coordinate system are determined as the coordinate offset of the first sampling point in the local coordinate system corresponding to the first viewpoint position, and the coordinate offset is determined as the sampling point position information of the first sampling point, which is recorded as (u_{A}, v_{A}), or the coordinate offset may be added to the position information of the first viewpoint position, and the sampling point position information of the first collection point is determined, and is recorded as (U+u_{A}, V+v_{A}). As shown in FIG. 8, a projection distance of the first sampling point A on an r axis is determined as a coordinate offset u_{A} of the first sampling point A. In some other embodiments, coordinates of an origin of each local coordinate system are cloud map coordinates of the corresponding first viewpoint position, sampling coordinates of the first sampling point in the local coordinate system may be obtained, and the sampling coordinates of the first sampling point may be determined as the sampling point position information of the first sampling point.

In some or all embodiments, operation S302 of performing position transformation on the sampling point position information from the local coordinate system to the space coordinate system to obtain the cloud sampling position information may be implemented in the following manner: modulo processing is performed on the sampling point position information to obtain the cloud sampling position information. For example, 'sampling point position information' mod 1 is performed. That is, decimal place(s) of the sampling point position information may be determined as the cloud sampling position information of the first sampling point.

Operation S303: Sample the basic cloud map data based on the cloud sampling position information to obtain sampled cloud information of the first sampling point.

In some or all embodiments, operation S303 may be implemented in the following manner: obtaining first pixel information of a pixel at the cloud sampling position information in the basic cloud map data, and determining the first pixel information as sampled cloud information of the first sampling point.

In some or all embodiments, operation S303 may alternatively be implemented in the following manner: when the basic cloud map data includes N pieces of hierarchical cloud map data, the computer device may obtain, from the N pieces of hierarchical cloud map data, target hierarchical cloud map data in a cloud map height range that includes a position height in the cloud sampling position information, and sample target hierarchical cloud map data based on the cloud sampling position information to obtain the sampled cloud information of the first sampling point, for example, obtaining second pixel information of a pixel of the target hierarchical cloud map data at the cloud sampling position information, and determining the second pixel information as the sampled cloud information of the first sampling point.

In some or all embodiments, operation S303 may alternatively be implemented in the following manner: sampling the basic cloud map data based on the cloud sampling position information when a latitude of the first viewpoint position is a third latitude threshold to obtain first cloud information of the first sampling point; sampling polar circle cloud map data based on the cloud sampling position information to obtain second cloud information of the first sampling point; and performing fusion processing on the first cloud information and the second cloud information to obtain sampled cloud information of the first sampling point. The third latitude threshold may be a boundary between a middle-and-low latitude and a high latitude. For example, fourth pixel information of a pixel of the polar circle cloud map data at the cloud sampling position information is obtained, and the fourth pixel information is determined as the second cloud information of the first sampling point; and fusion processing is performed on the first cloud information and the second cloud information to obtain the sampled cloud information of the first sampling point.

In an actual application, after the sampled cloud information of the first sampling point is obtained, the first sampling point may be rendered based on the sampled cloud information of the first sampling point; or, noise data may be added to the sampled cloud information of the first sampling point to obtain cloud density information of the first sampling point, and the first sampling point is rendered by using the cloud density information of the first sampling point. The noise data may be random noise, so that the noise data may be added based on basic cloud map data, thereby improving randomness of cloud density information of different sampling points without destroying orderliness of the cloud density information, and improving accuracy of cloud map processing. Specifically, refer to related descriptions in operation S907 in FIG. 9.

In this embodiment of this application, a space coordinate system may be obtained, and basic cloud map data is obtained in the space coordinate system; a local coordinate system that uses a first viewpoint position as an origin is obtained, sampling point position information of a first sampling point in the local coordinate system corresponding to the first viewpoint position is obtained, and position transformation from the local coordinate system to the space coordinate system is performed on the sampling point position information to obtain cloud sampling position information, where different local coordinate systems have different first viewpoint positions; and the basic cloud map data is sampled based on the cloud sampling position information to obtain sampled cloud information of the first sampling point. By using the foregoing process, a piece of basic cloud map data can be obtained, and then during sampling, coordinates are determined based on a local coordinate system. That is, the problem of "generating a spherical map on a spherical surface" is converted into the problem of "rolling a sphere on a plane and generating a planar map near a tangent point (that is, sampling of the local coordinate system)", thereby simplifying a procedure and improving efficiency of producing cloud map data. In addition, based on local sampling, overheads, resources, and the like do not need to be consumed when the cloud map data with relatively high precision is generated, thereby saving resources and improving accuracy and efficiency of cloud map processing.

Next, refer to FIG. 9, which is a schematic flowchart of cloud map data iterative processing according to an embodiment of this application. As shown in FIG. 9, this process may include the following operations.

Operation S901: Obtain a space coordinate system, and obtain basic cloud map data in the space coordinate system.

In an actual application, refer to related descriptions in operation S301 in FIG. 3. Details are not described herein again.

Operation S902: Obtain a local coordinate system i that uses a first viewpoint position i as an origin in an i^{th} video moving frame.

In an actual application, the local coordinate system that uses the first viewpoint position i as an origin (or the local coordinate system corresponding to the first viewpoint position i) refers to a coordinate system formed by three coordinate axes constructed by the first viewpoint position i by using the first viewpoint position i as the origin. For details, refer to related descriptions in operation S302 in FIG. 3, and details are not described herein again.

Operation S903: Obtain a first sampling point, obtain sampling point position information of a first sampling point in the local coordinate system i corresponding to the first viewpoint position i, and perform position transformation on the sampling point position information from the local coordinate system to the space coordinate system to obtain cloud sampling position information.

In an actual application, the computer device may obtain the first sampling point based on the first viewpoint position i. There are one or at least two first sampling points. The first sampling point is a viewpoint in a region covered by a viewpoint collection device corresponding to the first viewpoint position i. Or, a viewpoint region including the first viewpoint position i may be obtained, and a viewpoint included in the viewpoint region is determined as the first sampling point. A size of the viewpoint region may be a local sampling size. The local sampling size may be a default size, may be determined according to distances between first viewpoint positions respectively corresponding to adjacent viewpoint movement frames, or the like. This is not limited herein.

Operation S904: Sample the basic cloud map data based on the cloud sampling position information to obtain sampled cloud information of the first sampling point.

In an actual application, refer to related descriptions in operation S302 in FIG. 3. Details are not described herein again. That is, first pixel information at the cloud sampling position information may be obtained from the basic cloud map data, and the first pixel information is determined as sampled cloud information of the first sampling point; or, when the basic cloud map data includes N pieces of hierarchical cloud map data, second pixel information at the cloud sampling position information is obtained from the determined first hierarchical cloud map data, and the second pixel information is determined as sampled cloud information of the first sampling point and the like. The sampled cloud information may represent information about physical characteristics (such as a concentration) of a cloud at a corresponding first sampling point, and may be configured for obtaining cloud map data.

Operation S905: Detect a cloud map data completion status.

In an actual application, the cloud map data completion status of the object model may be detected, and if cloud map processing of the object model is completed, operation S907 is performed; and if cloud map processing of the object model is not completed, operation S906 is performed.

Operation S906: Perform i++, perform simulated movement on an object model, and determine the first viewpoint position i.

In an actual application, i++ is configured for performing a next viewpoint movement frame. For example, assuming that i is updated in such a manner that i=2+1, that is, a second viewpoint movement frame is updated to a third viewpoint movement frame. In this case, it is equivalent to that an i^{th} viewpoint movement frame is the third viewpoint movement frame, the second viewpoint movement frame becomes an (i-1)^{th} viewpoint movement frame, and the first viewpoint position corresponding to the (i-1)^{th} viewpoint movement frame is recorded as a first viewpoint position (i-1). Simulated movement may be performed on the object model, a tangent point between a moved object model and a simulation plane is determined, and the tangent point between the moved object model and the simulation plane is determined as the first viewpoint position i; or, after i++ is performed, a candidate position range that uses a first viewpoint position (i-) as a center and an adjacent movement threshold as a radius is determined on a surface of an object model of a to-be-parsed object, and the first viewpoint position i is randomly selected from the candidate position range; or, the first viewpoint position i is selected from the candidate position range along the viewpoint movement direction, and the viewpoint movement direction is configured for representing a direction of the first viewpoint position i relative to the first viewpoint position (i-). A region covered by the local coordinate system of the first viewpoint position i on an object surface of the to-be-parsed object, and a region that is adjacent to or intersects with a region covered by the local coordinate system of the first viewpoint position (i-) on the surface of the object model of the to-be-parsed object is less than or equal to a local repetition threshold.

Operation S902 is further returned and performed. A distance between the first viewpoint position i and the first viewpoint position (i-1) is less than or equal to an adjacent frame movement threshold, and the adjacent frame movement threshold is much less than a radius of the object model. That is, a distance between first viewpoint positions corresponding to any two adjacent viewpoint movement frames is less than or equal to the adjacent frame movement threshold. In this manner, when the local coordinate system is obtained, the local coordinate systems respectively corresponding to two adjacent viewpoint movement frames have a relatively small change, that is, a direction of a first coordinate axis and a direction of a third coordinate axis do not suddenly change, but gradually changes in a range that cannot be perceived by human eyes, so that an observation result of sampling cloud map data by the human eyes conforms to a continuous relative motion rule, thereby improving accuracy of cloud map processing.

Operation S907: Perform cloud map data rendering based on the sampled cloud information of the first sampling point.

In this embodiment of this application, through the foregoing process, sampled cloud information of all first sampling points may be obtained. It is assumed that a quantity of all first sampling points is M, and M is a positive integer. The cloud map data is configured to represent information such as distribution and form of a volume cloud under a bird's eye view. That is, the sampled cloud information respectively corresponding to the M first sampling points may be combined to obtain the object cloud map data corresponding to the object model. Or, noise data may be added to the sampled cloud information respectively corresponding to the M first sampling points to obtain the cloud density information respectively corresponding to the M first sampling points. The M first sampling points are rendered based on the cloud density information respectively corresponding to the M first sampling points to obtain object cloud map data corresponding to the object model. That is, if related information (that is, the sampled cloud information or the cloud density information) of a cloud corresponding to each first sampling point is known, the related information of the cloud corresponding to each first sampling point may be constructed into the object cloud map data of the object model, so as to draw the cloud map data of the to-be-parsed object.

When the object model is a model of the earth, the object cloud map data may be integrated into a navigation simulation system. When flight is simulated in the navigation simulation system, the object cloud map data may be rendered to simulate a real sky scenario, so that a real flight scenario may be simulated based on the object cloud map data. Or, the object cloud map data may be integrated into a virtual reality (VR) scenario, and the object cloud map data is rendered in the VR scenario, so that a user participating in the VR scenario can obtain a more real scenario experience, including a sailing VR scenario or a VR game scenario. For example, in the sailing VR scenario, the user can experience a real sailing process based on the rendered object cloud map data. For example, in the VR game scenario, when cloud map data is needed, the VR game scenario may be rendered based on the object cloud map data, and the user may participate in the VR game scenario, for example, an air battle VR game.

Through the foregoing process, spherical cloud map data samples that are seamlessly connected within a global range may be dynamically generated by only providing planar cloud map data in a relatively small square region, that is, initial unit cloud map data, so that a large amount of space for finely storing cloud map data and cloud map processing resources can be saved, and efficiency and accuracy of cloud map processing are improved.

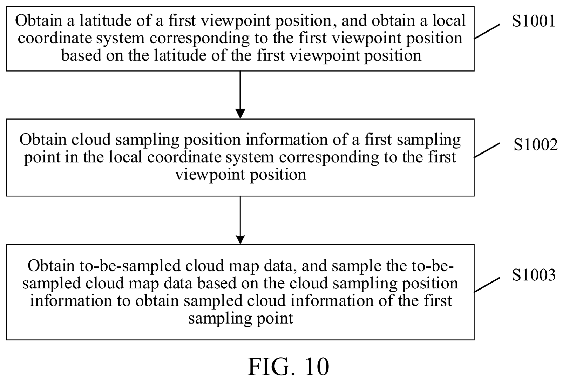

Next, refer to FIG. 10, which is a schematic flowchart of cloud sampling according to an embodiment of this application. As shown in FIG. 10, this process may include the following operations.

Operation S1001: Obtain a latitude of a first viewpoint position, and obtain a local coordinate system corresponding to the first viewpoint position based on the latitude of the first viewpoint position.

In an actual application, basic cloud map data and polar circle cloud map data are obtained. Specifically, referring to operation S301 of FIG. 3, basic cloud map data is generated. At a polar point position of the object model, a polar coordinate system is obtained by using a polar point as an origin, and by using 0° and 90° meridians as a horizontal coordinate axis and a vertical coordinate axis, and polar circle cloud map data is obtained for the polar coordinate system.

In some or all embodiments, a latitude of the first viewpoint position may be obtained. When the latitude of the first viewpoint position is less than or equal to a first latitude threshold, that is, the first viewpoint position is located in a middle-and-low latitude region, longitude and latitude coordinates of the first sampling point are determined as the cloud sampling position information of the first sampling point; or, modulo processing is performed on the longitude and latitude coordinates of the first sampling point to obtain the cloud sampling position information of the first sampling point, and operation S1003 of determining the basic cloud map data as to-be-sampled cloud map data, and sampling the basic cloud map data based on the cloud sampling position information to obtain the sampled cloud information of the first sampling point is performed. When the latitude of the first viewpoint position is greater than a first latitude threshold, a process of obtaining a local coordinate system that uses a first viewpoint position as an origin is performed, and operation S1002 is further performed.

In some other embodiments, when the latitude of the first viewpoint position is greater than a second latitude threshold, it indicates that the first viewpoint position is located in a high latitude region, the polar coordinate system is obtained at a polar point of the object model, cloud sampling position information of the first sampling point is obtained in the polar coordinate system, polar circle cloud map data is determined as basic cloud map data, that is, the polar circle cloud map data is determined as to-be-sampled cloud map data, and a process of operation S1003 of sampling the basic cloud map data based on the cloud sampling position information to obtain sampled cloud information of the first sampling point is performed. The object model refers to a model that performs cloud map parsing. If the first viewpoint position is less than the second latitude threshold, a process of obtaining a space coordinate system and obtaining basic cloud map data in the space coordinate system is performed. Further, the basic cloud map data is determined as the to-be-sampled cloud map data, and operation S1002 is performed.

The first latitude threshold and the second latitude threshold may be the same. In this case, the first latitude threshold and the second latitude threshold are boundaries between a middle-and-low latitude region and a high latitude region, that is, may be a third latitude threshold in this case, and the first latitude threshold and the second latitude threshold may alternatively be different.

In some or all embodiments, if a latitude of the first viewpoint position is less than or equal to the first latitude threshold, longitude and latitude coordinates of the first sampling point are determined as the cloud sampling position information of the first sampling point, the basic cloud map data is determined as the to-be-sampled cloud map data, and operation S1003 is performed. If the latitude of the first viewpoint position is greater than the second latitude threshold, the polar coordinate system is obtained at the polar point of the object model, the cloud sampling position information of the first sampling point is obtained in the polar coordinate system, the polar circle cloud map data is determined as the to-be-sampled cloud map data, and operation S1003 is performed. If the latitude of the first viewpoint position is greater than the first latitude threshold and is less than or equal to the second latitude threshold, the basic cloud map data is determined as the to-be-sampled cloud map data, and operation S1002 is performed.

In some other embodiments, if the latitude of the first viewpoint position is the third latitude threshold, both the basic cloud map data and the polar circle cloud map data are determined as the to-be-sampled cloud map data, and operation S1002 is performed.

Operation S1002: Obtain cloud sampling position information of a first sampling point in the local coordinate system corresponding to the first viewpoint position.

In this embodiment of this application, for details, refer to related descriptions of operation S302 in FIG. 3. This is not limited herein.

Operation S1003: Obtain to-be-sampled cloud map data, and sample the to-be-sampled cloud map data based on the cloud sampling position information to obtain sampled cloud information of the first sampling point.

In this embodiment of this application, for details, refer to related descriptions of operation S303 in FIG. 3. This is not limited herein. For example, when the to-be-sampled cloud map data includes basic cloud map data and polar circle cloud map data, the basic cloud map data may be sampled based on the cloud sampling position information to obtain the first cloud information of the first sampling point. The polar circle cloud map data is sampled based on the cloud sampling position information to obtain second cloud information of the first sampling point. Fusion processing is performed on the first cloud information and the second cloud information to obtain the sampled cloud information of the first sampling point.

Targeted sampling processing is performed by using the latitude of the first viewpoint position, so that in a special case, special processing may be implemented on the cloud map data, and a sampling result of the cloud map data may be seamlessly and smoothly transited. For example, when the latitude of the first viewpoint position is the third latitude threshold, both the basic cloud map data and the polar circle cloud map data are determined as the to-be-sampled cloud map data, and a sampling fusion operation is performed on the cloud map data on both sides, so that the sampling result of the cloud map data can be seamlessly and smoothly transited, thereby improving accuracy of cloud map processing.

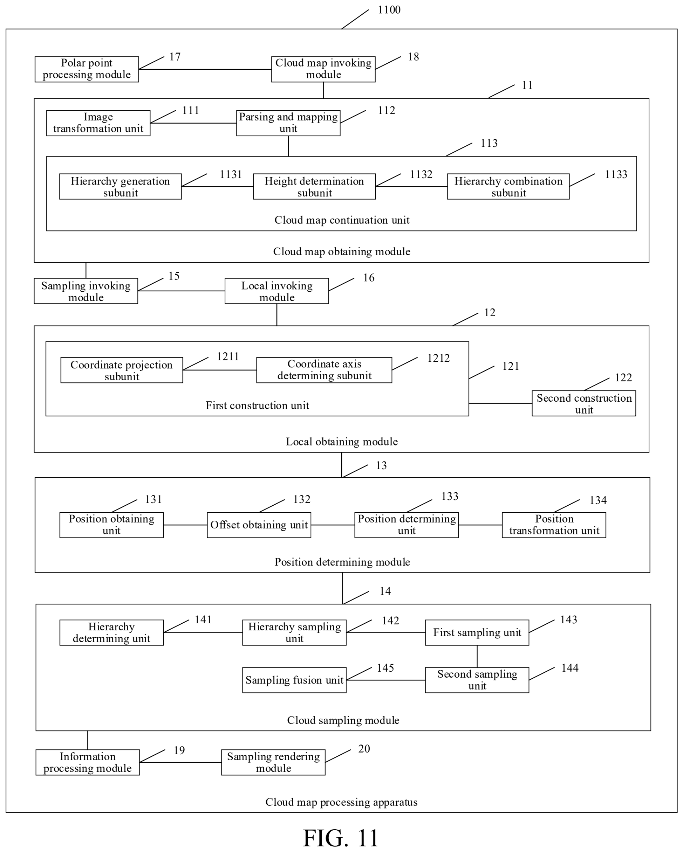

Refer to FIG. 11, which is a schematic diagram of a cloud map processing apparatus according to an embodiment of this application. The cloud map processing apparatus may be a computer program (including program code and the like) that is run on a computer device. For example, the cloud map processing apparatus is application software. The apparatus may be configured to execute corresponding operations in a method according to the embodiments of this application. As shown in FIG. 11, a cloud map processing apparatus 1100 may be applied to a computer device in an embodiment corresponding to FIG. 3. Specifically, the apparatus may include: a cloud map obtaining module 11, a local obtaining module 12, a position determining module 13, and a cloud sampling module 14.

The cloud map obtaining module 11 is configured to obtain a space coordinate system, and obtain basic cloud map data in the space coordinate system.

The local obtaining module 12 is configured to obtain a local coordinate system that uses a first viewpoint position as an origin. Different local coordinate systems have different first viewpoint positions.

The position determining module 13 is configured to obtain sampling point position information of the first sampling point in the local coordinate system corresponding to the first viewpoint position, and perform position transformation on the sampling point position information from the local coordinate system to the space coordinate system to obtain cloud sampling position information.

The cloud sampling module 14 is configured to sample the basic cloud map data based on the cloud sampling position information to obtain sampled cloud information of the first sampling point.

In some or all embodiments, the cloud map obtaining module 11 is further configured to obtain candidate cloud map data, and associate the candidate cloud map data with the space coordinate system to generate initial unit cloud map data, determine the initial unit cloud map data as the basic cloud map data, or perform a seamless continuation on the initial unit cloud map data to generate the basic cloud map data.

In some or all embodiments, the cloud map obtaining module 11 includes:
an image transformation unit 111, configured to obtain a to-be-parsed image, and perform coordinate transformation on an image size of the to-be-parsed image to obtain a space coordinate system;
a parsing and mapping unit 112, configured to perform image parsing on the to-be-parsed image, and map a parsing result to the space coordinate system to obtain initial unit cloud map data; and
a cloud map continuation unit 113, configured to perform seamless continuation on the initial unit cloud map data based on the initial unit cloud map data to generate the basic cloud map data. The basic cloud map data is infinite cloud map data.

In some or all embodiments, a quantity of to-be-parsed images is N, and N is a positive integer. The cloud map continuation unit 113 includes:
a hierarchy generation subunit 1131, configured to perform, based on the initial unit cloud map data respectively corresponding to N to-be-parsed images, seamless continuation on N pieces of initial unit cloud map data respectively to generate N pieces of hierarchical cloud map data; and
a height determining subunit 1132, configured to determine, based on height ranges respectively corresponding to the N to-be-parsed images, cloud map height ranges respectively corresponding to the N pieces of hierarchical cloud map data; and
a hierarchy combination subunit 1133, configured to combine the N pieces of hierarchical cloud map data based on the cloud map height ranges respectively corresponding to the N pieces of hierarchical cloud map data to obtain the basic cloud map data.

In some or all embodiments, the local obtaining module 12 includes:
a first construction unit 121, configured to: in an i^{th} viewpoint movement frame, when i is an initial value, determine a first viewpoint position i based on a first geographic coordinate point, determine a first coordinate axis i based on a second geographic coordinate point and the first geographic coordinate point, construct a second coordinate axis i in a direction from an object model center point to the first viewpoint position i, determine a third coordinate axis i based on the first coordinate axis i and the second coordinate axis i, and form a local coordinate system i corresponding to the first viewpoint position i by the first coordinate axis i, the second coordinate axis i, and the third coordinate axis i, where the object model center point is a center point of an object model on which cloud parsing is performed; and
a second construction unit 122, configured to: when i is not the initial value, determine, a viewing prospective collection point of the i^{th} local coordinate system, as a first viewpoint position i, construct a second coordinate axis i from a direction from the object model center point to the first viewpoint position i, construct a first coordinate axis i based on a third coordinate axis in an (i-1)^{th} local coordinate system and the second coordinate axis i, construct a third coordinate axis i of the i^{th} local coordinate system based on the first coordinate axis i and the second coordinate axis i, and form a local coordinate system i corresponding to the first viewpoint position i by using the first coordinate axis i, the second coordinate axis i, and the third coordinate axis i.

In some or all embodiments, when the first coordinate axis i is determined based on the second geographic coordinate point and the first geographic coordinate point, the first construction unit 121 includes:
a coordinate projection subunit 1211, configured to obtain a tangent plane of the object model at the first geographic coordinate point, and obtain a projection length of the second geographic coordinate point on the tangent plane;
a coordinate axis determining subunit 1212, configured to determine a direction from the first geographic coordinate point to the second geographic coordinate point as the first coordinate axis i when the projection length of the second geographic coordinate point on the tangent plane is not 0, and move the second geographic coordinate point along the tangent plane to obtain the third geographic coordinates when the projection length of the second geographic coordinate point on the tangent plane is 0, and determine a direction from the first geographic coordinate point to the third geographic coordinates as the first coordinate axis i when the projection length of the third geographic coordinates on the tangent plane is not 0.

In some or all embodiments, the position determining module 13 includes:
a position obtaining unit 131, configured to obtain position information of the first viewpoint position;
an offset obtaining unit 132, configured to obtain a coordinate offset of the first sampling point in the local coordinate system corresponding to the first viewpoint position; and
a position determining unit 133, configured to add a coordinate offset to the position information of the first viewpoint position to determine sampling point position information of the first sampling point; and
a position transformation unit 134, configured to perform modulo processing on the sampling point position information to obtain the cloud sampling position information.

The basic cloud map data includes N pieces of hierarchical cloud map data. The cloud sampling module 14 includes:
a hierarchy determining unit 141, configured to obtain, from the N pieces of hierarchical cloud map data, a target hierarchical cloud map data whose cloud map height range includes a position height in the cloud sampling position information; and
a hierarchy sampling unit 142, configured to sample the target hierarchical cloud map data based on the cloud sampling position information to obtain sampled cloud information of the first sampling point.

In some or all embodiments, the apparatus 1100 further includes:
a sampling invoking module 15, configured to determine longitude and latitude coordinates of the first sampling point as the cloud sampling position information of the first sampling point when a latitude of the first viewpoint position is less than or equal to a first latitude threshold, and perform an operation of sampling the basic cloud map data based on the cloud sampling position information to obtain sampled cloud information of the first sampling point; and
a local invoking module 16, configured to perform a process of obtaining the local coordinate system that uses the first viewpoint position as an origin when the latitude of the first viewpoint position is greater than the first latitude threshold.

In some or all embodiments, the apparatus 1100 further includes:
a polar point processing module 17, configured to obtain a polar coordinate system at a polar point of an object model if the first viewpoint position is greater than a second latitude threshold, obtain the cloud sampling position information of the first sampling point in the polar coordinate system, determine polar circle cloud map data as basic cloud map data, and perform a process of sampling the basic cloud map data based on the cloud sampling position information to obtain sampled cloud information of the first sampling point, where the object model refers to a model that performs cloud map parsing; and
a cloud map invoking module 18, configured to perform a process of obtaining a space coordinate system and obtaining basic cloud map data in the space coordinate system if the first viewpoint position is less than the second latitude threshold.

In some or all embodiments, the cloud sampling module 14 includes:
a first sampling unit 143, configured to sample the basic cloud map data based on the cloud sampling position information if the latitude of the first viewpoint position is a third latitude threshold to obtain first cloud information of the first sampling point;
a second sampling unit 144, configured to sample polar circle cloud map data based on the cloud sampling position information to obtain second cloud information of the first sampling point; and
a sampling fusion unit 145, configured to perform fusion processing on the first cloud information and the second cloud information to obtain sampled cloud information of the first sampling point.

In some or all embodiments, the apparatus 1100 further includes:
an information processing module 19, configured to add noise data to the sampled cloud information of the first sampling point to obtain cloud density information of the first sampling point; and
a sampling rendering module 20, configured to render the first sampling point by using the cloud density information of the first sampling point.

An embodiment of this application provides a cloud map processing apparatus. By the apparatus, a space coordinate system may be obtained, and basic cloud map data is obtained in the space coordinate system; a local coordinate system that uses a first viewpoint position as an origin is obtained, sampling point position information of a first sampling point in the local coordinate system corresponding to the first viewpoint position is obtained, and position transformation from the local coordinate system to the space coordinate system is performed on the sampling point position information to obtain cloud sampling position information, where different local coordinate systems have different first viewpoint positions; and the basic cloud map data is sampled based on the cloud sampling position information to obtain sampled cloud information of the first sampling point. By using the foregoing process, a piece of basic cloud map data can be obtained, and then during sampling, coordinates are determined based on a local coordinate system. That is, the problem of "generating a spherical map on a spherical surface" is converted into the problem of "rolling a sphere on a plane and generating a planar map near a tangent point (that is, sampling of the local coordinate system)", thereby simplifying a procedure and improving efficiency of producing cloud map data. In addition, based on local sampling, overheads, resources, and the like do not need to be consumed when the cloud map data with relatively high precision is generated, thereby saving resources and improving accuracy and efficiency of cloud map processing.

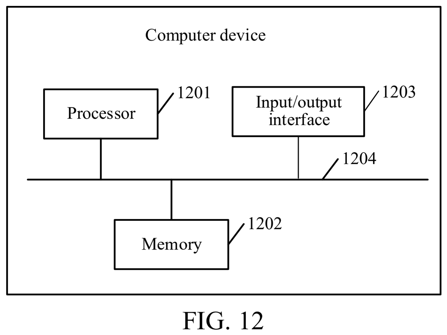

Refer to FIG. 12, which is a schematic diagram of a structure of a computer device according to an embodiment of this application. As shown in FIG. 12, the control device in this embodiment of this application may include: one or more processors 1201, a memory 1202, and an input/output interface 1203. The processor 1201, the memory 1202, and the input/output interface 1203 are connected through a bus 1204. The memory 1202 is configured to store a computer program. The computer program includes program instructions. The input/output interface 1203 is configured to receive data and output data, for example, configured to perform data interaction between the computer device and a service device. The processor 1201 is configured to execute the program instructions stored in the memory 1202.

In some or all embodiments, the processor 1201 may perform the following operations:
obtaining a space coordinate system, and obtaining basic cloud map data in the space coordinate system; obtaining a local coordinate system that uses a first viewpoint position as an origin, obtaining sampling point position information of a first sampling point in the local coordinate system corresponding to the first viewpoint position, and performing position transformation on the sampling point position information from the local coordinate system to the space coordinate system to obtain cloud sampling position information, where different local coordinate systems have different first viewpoint positions; and sampling the basic cloud map data based on the cloud sampling position information to obtain sampled cloud information of the first sampling point.

In some or all embodiments, the processor 1201 may be a central processing unit (CPU), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

The memory 1202 may include a read-only memory (ROM) and a random access memory (RAM), and provides instructions and data to the processor 1201 and the input/output interface 1203. A part of the memory 1202 may further include a non-volatile random access memory (NVRAM). For example, the processor 1202 may further store information of a device type.

In a specific implementation, the computer device may perform implementations provided by operations in FIG. 3 by using functional modules built in the computer device. For details, refer to the implementations according to the operations in FIG. 3. Details are not described herein again.

An embodiment of this application provides a computer device, including: a processor, an input/output interface, and a memory. The processor obtains a computer program in the memory, and performs operations of a method shown in FIG. 3 to perform cloud map processing operations. In this embodiment of this application, a space coordinate system may be obtained, and basic cloud map data is obtained in the space coordinate system; a local coordinate system that uses a first viewpoint position as an origin is obtained, sampling point position information of a first sampling point in the local coordinate system corresponding to the first viewpoint position is obtained, and position transformation from the local coordinate system to the space coordinate system is performed on the sampling point position information to obtain cloud sampling position information, where different local coordinate systems have different first viewpoint positions; and the basic cloud map data is sampled based on the cloud sampling position information to obtain sampled cloud information of the first sampling point. By using the foregoing process, a piece of basic cloud map data can be obtained, and then during sampling, coordinates are determined based on a local coordinate system. That is, the problem of "generating a spherical map on a spherical surface" is converted into the problem of "rolling a sphere on a plane and generating a planar map near a tangent point (that is, sampling of the local coordinate system)", thereby simplifying a procedure and improving efficiency of producing cloud data. In addition, based on local sampling, overheads, resources, and the like do not need to be consumed when the cloud data with relatively high precision is generated, thereby saving resources and improving accuracy and efficiency of cloud map processing.

An embodiment of this application further provides a computer-readable storage medium. The computer-readable storage medium stores a computer program. The computer program is applicable to be loaded and executed by a processor to perform the cloud map processing method according to the operations in FIG. 3. For details, refer to the implementations according to the operations in FIG. 3. Details are not described herein again. In addition, the description of beneficial effects of the same method are not described herein again. For technical details that are not disclosed in the embodiments of the computer-readable storage medium included in this application, reference may be made to the descriptions about the method embodiments of this application. As an example, the computer program may be deployed on a computing device for executing, or executed on a plurality of computing devices located at a location, or executed on a plurality of computing devices distributed in a plurality of locations and interconnected through communication networks.

The computer-readable storage medium may be an internal storage unit in the cloud map processing apparatus according to any one of the foregoing embodiments or the computer device, for example, a hard disk or an internal memory of the computer device. The computer-readable storage medium may be an external storage device of the computer device, for example, a plug-in hard disk, a smart media card (SMC), a secure digital (SD) card, or a flash card equipped on the computer device. Further, the computer-readable storage medium may further include both the internal storage unit and the external storage device of the computer device. The computer-readable storage medium is configured to store the computer program and other programs and data that are required by the computer device. The computer-readable storage medium may be further configured to temporarily store data that has been outputted or is to be outputted.

Embodiments of this application further provide a computer program product or a computer program. The computer program product or the computer program includes computer instructions. The computer instructions are stored in a computer-readable storage medium. The processor of the computer device reads the computer instructions from the computer-readable storage medium, the processor executes the computer instructions, so that the computer device performs methods provided in various manners in FIG. 3. A piece of basic cloud map data is obtained, and then during sampling, coordinates are determined based on a local coordinate system. That is, the problem of "generating a spherical map on a spherical surface" is converted into the problem of "rolling a sphere on a plane and generating a planar map near a tangent point (that is, sampling of the local coordinate system)", thereby simplifying a procedure and improving efficiency of producing cloud data. In addition, based on local sampling, overheads, resources, and the like do not need to be consumed when the cloud data with relatively high precision is generated, thereby saving resources and improving accuracy and efficiency of cloud map processing.

Terms "first", "second", and the like in the specification, claims, and accompanying drawings of the embodiments of this application are intended to distinguish different objects, instead of describing a particular sequence. In addition, terms "include" and any variation thereof are intended to cover a non-exclusive inclusion. For example, processes, methods, apparatuses, products, or devices including a series of operations or units are not limited to the listed operations or modules, but instead, include operations or modules not listed, or include other operations or units inherent in these processes, methods, apparatuses, products, or devices.

A person of ordinary skill in the art may realize that operations of units and algorithms of various examples described with reference to the embodiments disclosed in this specification can be implemented in electronic hardware, computer software, or a combination of the electronic hardware and the computer software. To clearly describe the interchangeability of hardware and software, the compositions and operations of the various examples have been generally described in terms of functionality in the description. Whether the functions are executed in a mode of hardware or software depends on particular applications and design constraint conditions of the technical solutions. Those skilled in the art may use different methods to implement the described functions for each particular application, but it is not to be considered that this implementation goes beyond the scope of this application.

The methods and related apparatuses provided in the embodiments of this application are described with reference to the method flowcharts and/or schematic structural diagrams provided in the embodiments of this application. Specifically, each process and/or block in the method flowcharts and/or schematic structural diagrams and a combination of processes and/or blocks in the flowcharts and/or block diagrams may be implemented according to computer program instructions. The computer program instructions may be provided to a general-purpose computer, a dedicated computer, an embedded processor, or a processor of another programmable cloud map processing device to generate a machine, so that the instructions executed by the computer or the processor of the another programmable cloud map processing device generate an apparatus configured to implement functions specified in one or more processes of the flowcharts and/or one or more blocks of the schematic diagrams of the structures. These computer program instructions may alternatively be stored in a computer-readable memory that can guide a computer or another programmable cloud map processing device to operate in a specific manner, so that the instructions stored in the computer-readable memory generate an artifact including an instruction apparatus. The instruction apparatus implements the functions specified in one or more processes of the flowcharts and/or one or more blocks of the schematic diagrams of the structures. These computer program instructions may alternatively be loaded onto a computer or another programmable cloud map processing device, so that a series of operations are performed on the computer or the another programmable device, thereby generating computer-implemented processing. Therefore, the instructions executed on the computer or the another programmable device provide operations for implementing a specific function in one or more processes in the flowcharts and in one or more blocks in the schematic structural diagram.

The operations of the methods in the embodiments of this application may be adjusted in terms of a sequence, combined, and deleted based on an actual requirement.

The modules in the device of the embodiments of this application can be combined, divided and deleted according to actual needs.

What is disclosed above is merely exemplary embodiments of this application, and certainly is not intended to limit the scope of the claims of this application. Therefore, equivalent variations made in accordance with the claims of this application shall fall within the scope of this application.

## Claims

1. A cloud map processing method, executable by a computer device, **characterized by** comprising:
obtaining a space coordinate system, and obtaining basic cloud map data in the space coordinate system;
obtaining a local coordinate system that uses a first viewpoint position as an origin, different local coordinate systems having different first viewpoint positions;
obtaining sampling point position information of a first sampling point in the local coordinate system corresponding to the first viewpoint position;
performing position transformation on the sampling point position information from the local coordinate system to the space coordinate system to obtain cloud sampling position information; and
sampling the basic cloud map data based on the cloud sampling position information to obtain sampled cloud information of the first sampling point.

2. The method according to claim 1, wherein the obtaining basic cloud map data in the space coordinate system comprises:
obtaining candidate cloud map data, and associating the candidate cloud map data with the space coordinate system to generate initial unit cloud map data; and
determining the initial unit cloud map data as the basic cloud map data, or performing seamless continuation on the initial unit cloud map data to generate the basic cloud map data.

3. The method according to claim 1, wherein the obtaining a space coordinate system, and obtaining basic cloud map data in the space coordinate system comprises:
obtaining a to-be-parsed image, and performing coordinate transformation on an image size of the to-be-parsed image to obtain the space coordinate system;
performing image parsing on the to-be-parsed image, and mapping a parsing result to the space coordinate system to obtain initial unit cloud map data; and
performing seamless continuation on the initial unit cloud map data based on the initial unit cloud map data to generate the basic cloud map data, the basic cloud map data being infinite cloud map data.

4. The method according to claim 3, wherein a quantity of the to-be-parsed images is N, and N is a positive integer; the performing seamless continuation on the initial unit cloud map data based on the initial unit cloud map data to generate the basic cloud map data comprises:
performing seamless continuation on N pieces of initial unit cloud map data based on the initial unit cloud map data respectively corresponding to the N to-be-parsed images to generate N pieces of hierarchical cloud map data;
determining, based on height ranges respectively corresponding to the N to-be-parsed images, cloud map height ranges respectively corresponding to the N pieces of hierarchical cloud map data; and
combining the N pieces of hierarchical cloud map data based on the cloud map height ranges respectively corresponding to the N pieces of hierarchical cloud map data to obtain the basic cloud map data.

5. The method according to claim 1, wherein the obtaining a local coordinate system that uses a first viewpoint position as an origin comprises:
in obtaining an i^{th} local coordinate system, when i is an initial value, determining a first viewpoint position based on a first geographic coordinate point, determining a first coordinate axis based on a second geographic coordinate point and the first geographic coordinate point, constructing a second coordinate axis in a direction from an object model center point to the first viewpoint position, determining a third coordinate axis based on the first coordinate axis and the second coordinate axis, and forming the i^{th} local coordinate system corresponding to the first viewpoint position by using the first coordinate axis, the second coordinate axis, and the third coordinate axis, the object model center point being a center point of an object model on which cloud map parsing is performed; and
when i is not the initial value, determining, a viewing prospective collection point of the i^{th} local coordinate system, as the first viewpoint position, constructing the second coordinate axis in a direction from the object model center point to the first viewpoint position, constructing the first coordinate axis based on a third coordinate axis in an (i-1)^{th} local coordinate system and the second coordinate axis, constructing a third coordinate axis of the i^{th} local coordinate system based on the first coordinate axis and the second coordinate axis, and forming the i^{th} local coordinate system corresponding to the first viewpoint position by using the first coordinate axis, the second coordinate axis, and the third coordinate axis.

6. The method according to claim 5, wherein the determining a first coordinate axis based on a second geographic coordinate point and the first geographic coordinate point comprises:
obtaining a tangent plane of the object model at the first geographic coordinate point, and obtaining a projection length of the second geographic coordinate point in the tangent plane; and
when the projection length of the second geographic coordinate point on the tangent plane is not 0, determining a direction from the first geographic coordinate point to the second geographic coordinate point as the first coordinate axis.

7. The method according to claim 6, wherein the determining a first coordinate axis based on a second geographic coordinate point and the first geographic coordinate point comprises:
when the projection length of the second geographic coordinate point on the tangent plane is 0, moving the second geographic coordinate point along the tangent plane to obtain third geographic coordinates; and
when the projection length of the third geographic coordinates on the tangent plane is not 0, determining a direction from the first geographic coordinate point to the third geographic coordinates as the first coordinate axis.

8. The method according to claim 1, wherein the obtaining sampling point position information of a first sampling point in the local coordinate system corresponding to the first viewpoint position, and performing position transformation on the sampling point position information from the local coordinate system to the space coordinate system to obtain cloud sampling position information comprises:
obtaining position information of the first viewpoint position, and obtaining a coordinate offset of the first sampling point in the local coordinate system corresponding to the first viewpoint position;
adding the coordinate offset to the position information of the first viewpoint position to obtain sampling point position information of the first sampling point; and
performing modulo processing on the sampling point position information to obtain cloud sampling position information.

9. The method according to claim 1, wherein the basic cloud map data comprises N pieces of hierarchical cloud map data; the sampling the basic cloud map data based on the cloud sampling position information to obtain sampled cloud information of the first sampling point comprises:
obtaining, from the N pieces of hierarchical cloud map data, target hierarchical cloud map data whose cloud map height range comprises a position height in the cloud sampling position information; and
sampling the target hierarchical cloud map data based on the cloud sampling position information to obtain the sampled cloud information of the first sampling point.

10. The method according to claim 1, wherein the sampling the basic cloud map data based on the cloud sampling position information to obtain sampled cloud information of the first sampling point comprises:
obtaining first pixel information of a pixel of the basic cloud map data at the cloud sampling position information, and determining the first pixel information as sampled cloud information of the first sampling point.

11. The method according to claim 1, further comprising:
when a latitude of the first viewpoint position is less than or equal to a first latitude threshold, determining longitude and latitude coordinates of the first sampling point as the cloud sampling position information of the first sampling point, and performing a step of sampling the basic cloud map data based on the cloud sampling position information to obtain sampled cloud information of the first sampling point; or
performing a process of obtaining the local coordinate system that uses the first viewpoint position as an origin when the latitude of the first viewpoint position is greater than the first latitude threshold.

12. The method according to claim 1, further comprising:
when a latitude of the first viewpoint position is greater than a second latitude threshold, obtaining a polar coordinate system at a polar point of an object model, obtaining the cloud sampling position information of the first sampling point in the polar coordinate system, determining polar circle cloud map data as basic cloud map data, and performing a process of sampling the basic cloud map data based on the cloud sampling position information to obtain sampled cloud information of the first sampling point, the object model referring to a model that performs cloud map parsing; and
when the first viewpoint position is less than the second latitude threshold, performing the process of obtaining a space coordinate system, and obtaining basic cloud map data in the space coordinate system.

13. The method according to claim 1, wherein the sampling the basic cloud map data based on the cloud sampling position information to obtain sampled cloud information of the first sampling point comprises:
when a latitude of the first viewpoint position is a third latitude threshold, sampling the basic cloud map data based on the cloud sampling position information to obtain first cloud information of the first sampling point;
sampling polar circle cloud map data based on the cloud sampling position information to obtain second cloud information of the first sampling point; and
performing fusion processing on the first cloud information and the second cloud information to obtain sampled cloud information of the first sampling point.

14. The method according to claim 1, further comprising:
adding noise data to the sampled cloud information of the first sampling point to obtain cloud density information of the first sampling point; and
rendering the first sampling point by using the cloud density information of the first sampling point.

15. A cloud map processing apparatus, **characterized by** comprising:
a cloud map obtaining module, configured to obtain a space coordinate system, and obtain basic cloud map data in the space coordinate system;
a local obtaining module, configured to obtain a local coordinate system that uses a first viewpoint position as an origin;
a position determining module, configured to obtain sampling point position information of a first sampling point in the local coordinate system corresponding to the first viewpoint position, and perform position transformation on the sampling point position information from the local coordinate system to the space coordinate system to obtain cloud sampling position information, different viewpoint positions corresponding to different local coordinate systems; and
a cloud sampling module, configured to sample the basic cloud map data based on the cloud sampling position information to obtain sampled cloud information of the first sampling point.

16. A computer device, comprising a processor, a memory, and an input/output interface,
the processor being separately connected to the memory and the input/output interface, the input/output interface being configured to receive data and output data, the memory being configured to store a computer program, and the processor being configured to invoke the computer program to enable the computer device to perform the method according to any one of claims 1 to 14.

17. A computer-readable storage medium, having a computer program stored therein, the computer program being applicable to be loaded and executed by a processor, so that a computer device having the processor performs the method according to any one of claims 1 to 14.

18. A computer program product, comprising a computer program, the computer program, when executed by a processor, implementing the method according to any one of claims 1 to 14.
